# EUROPÄISCHE PATENTSCHRIFT

(11) **EP 3 881 736 B1**
(45) Veröffentlichungstag und Bekanntmachung des Hinweises auf die Patenterteilung: **10.07.2024**
(21) Anmeldenummer: 20163962.2
(22) Anmeldetag: 18.03.2020
(51) Int. Cl.: A47K 5/12, A47K 10/32, A47K 10/36, G01F 23/00, G05B 15/02, G01F 23/80

(54) **SPENDER MIT 2-WEGE-KOMMUNIKATION**
DISPENSER WITH 2-WAY COMMUNICATION
DISTRIBUTEUR AYANT UNE COMMUNICATION À 2 VOIES

(43) Veröffentlichungstag der Anmeldung: 22.09.2021
(73) Patentinhaber: Hagleitner, Hans Georg, 5700 Zell am See (AT)
(72) Erfinder: Hagleitner, Hans Georg, 5700 Zell am See (AT)
(74) Vertreter: Margotti, Herwig Franz

(56) Entgegenhaltungen:
- US-A1- 2016 216 714
- US-A1- 2018 368 626

## Beschreibung

Aus dem Stand der Technik sind Spender für Sanitär- oder Hygieneprodukte, beispielsweise Seife, Papier, Reinigungsmittel, Desinfektionsmittel, Pflegemittel oder dergleichen, bekannt.

Ursprünglich wurden derartige Spender mechanisch betätigt und hatten daher keine elektromechanischen Komponenten. Im Zuge der Modernisierung der Spender wurden jedoch einige der Komponenten der Spender elektrisch oder elektromechanisch ausgebildet, um beispielsweise die Betätigung der Spender mittels Bewegungssensoren oder eine Betriebsstatusanzeige am Spender zu ermöglichen.

Die Einstellung der Spender erfolgt jedoch weiterhin durch mechanische Einstellvorrichtungen am Spender selbst, beispielsweise über einen Schalter oder ein Stellrad, sodass zur Einstellung der Spender ein Servicepersonal zum Spender gehen muss, um diesen zu adjustieren. Mechanische Stelleinrichtungen weisen jedoch viele Nachteile auf, insbesondere da sie fehleranfällig und nicht zentral einstellbar sind.

Ein weiterer Nachteil mechanischer Spender ist, dass nur durch eine unmittelbare Begehung und Kontrolle festgestellt werden kann, ob beispielsweise Sanitär- oder Hygieneprodukte nachgefüllt werden müssen. Zwar könnte am Spender selbst eine Kontrollleuchte bzw. Betriebszustandsanzeige vorgesehen werden, jedoch ermöglicht dies nicht die Kontrolle des Spenders aus der Ferne, um gezielt Servicepersonal zum Spender zu schicken.

Den Spender mit einem einfachen Sendeempfängern auszustatten, ist jedoch nicht zielführend. Würde man den Spender beispielsweise mit einem Sendeempfänger mit SIM-Karte zur zellulären Mobilfunkkommunikation ausstatten, sodass der Spender mit einer Zentrale kommunizieren kann, würde dies dazu führen, dass der Spender nicht mehr durch Servicepersonal aus der Nähe eingestellt werden kann. Zwar könnte der Spender weiterhin eine mechanische Stelleinrichtung umfassen, jedoch würde dies dazu führen, dass der Spender die Nachteile beider Ausführungsformen aufweist, d.h. einerseits besonders hohe Betriebskosten durch die benötigte Mobilfunkverbindung und andererseits eine hohe Fehleranfälligkeit durch die mechanische Stellvorrichtung.

Aus der US2016216714A1 ist ein Spender für Seife oder andere Hygienefluide bekannt, dessen Ausgabemenge mittels eines Smartphones eingestellt werden kann. Um dies zu ermöglichen, weist der Spender ein Kommunikationsmodul auf, welches zur Kurzreichweitenkommunikation wie NFC oder WLAN (IEEE 802.11) ausgebildet ist. In einer alternativen Ausführungsform kann der Spender über ein Netzwerk kommunizieren. Aus der US2018368626A1 ist ein Spender für Handtücher bekannt. Gemäß Abs. [0029] kann der Spender eine Datenübertragungseinheit aufweisen, die Betriebsdaten an ein Datenauswertesystem sendet. Die Kommunikation kann über WiFi, Bluetooth oder TCP/IP erfolgen. Beide Spender haben den Nachteil, dass die Einstellmöglichkeiten dieser Spender in der Praxis äußerst beschränkt sind.

Es ist daher die Aufgabe der Erfindung, einen Spender für Sanitär- oder Hygieneprodukte bereitzustellen, der die Nachteile des Standes der Technik überwindet.

Diese Aufgabe wird durch einen Spender für Sanitär- oder Hygieneprodukte gelöst, beispielsweise für Seife, Papier, Reinigungsmittel, Desinfektionsmittel, Pflegemittel oder dergleichen, wobei der Spender zumindest eine Datenübertragungseinheit aufweist, die zur kabellosen Kurzreichweitenkommunikation mit einem Mobilgerät über einen ersten Kommunikationsweg und zur kabellosen Kurzreichweitenkommunikation mit einem mit einem entfernten Server kommunizierenden Gateway über einen zweiten Kommunikationsweg ausgebildet ist.

Der erfindungsgemäße Spender ermöglicht somit, mit Geräten zu kommunizieren, die sich sowohl in der Nähe des Spenders als auch vom Spender entfernt befinden, ohne dass die Nachteile des Standes der Technik auftreten. Insbesondere kann einerseits auf fehleranfällige mechanische Stellvorrichtungen verzichtet werden und andererseits muss auch keine kostenintensive Möglichkeit zur Mobilfunkkommunikation bereitgestellt werden.

Die erfindungsgemäße Lösung schafft durch den Kommunikationsweg mit dem Gateway, dass die Kommunikationsverbindung mit dem entfernten Server ermöglicht wird. Somit muss die zumindest eine Datenübertragungseinheit des Spenders lediglich dazu ausgebildet sein, mit dem Gateway über eine kabellose Kurzreichweitenkommunikation zu kommunizieren, der seinerseits die Kommunikationsverbindung mit dem Server herstellt, ohne dass der Spender eine eigene dedizierte Verbindung mit dem Server herstellen müsste.

Um den Server aus der Nähe einzustellen, ist erfindungsgemäß vorgesehen, dass der Spender mit dem Mobilgerät kommunizieren kann. Zur Kommunikation mit dem Spender führt Servicepersonal, das den Spender einstellen oder Daten aus diesem auslesen will, somit bloß das Mobilgerät mit sich, ohne unmittelbar einen Schalter oder andere Stellvorrichtung des Spenders bedienen zu müssen.

In der Praxis kann der Spender derart verwendet werden, dass der Spender vorrangig über das Gateway mit dem Server kommuniziert. Erst wenn Servicepersonal mit dem Mobilgerät in die Nähe des Spenders kommt und Daten aus dem Spender auslesen oder diesen einstellen will, kommuniziert der Spender mit dem Mobilgerät über die kabellose Kurzreichweitenkommunikation.

In einer ersten bevorzugten Ausführungsform weist der Spender eine einzige Datenübertragungseinheit auf, die zur kabellosen Kurzreichweitenkommunikation mit einem Mobilgerät über den ersten Kommunikationsweg und zur kabellosen Kurzreichweitenkommunikation mit einem Gateway über den zweiten Kommunikationsweg ausgebildet ist. Dies ermöglicht einen besonders einfach aufgebauten Spender, der trotzdem dazu in der Lage ist, sowohl mit einem Server über das Gateway als auch mit einem Mobilgerät zu kommunizieren, um die erfindungsgemäße Funktion bereitzustellen.

In einer zweiten bevorzugten Ausführungsform, die zur vorgenannten ersten Ausführungsform alternativ ist, weist der Spender eine erste Datenübertragungseinheit auf, die zur kabellosen Kurzreichweitenkommunikation mit einem Mobilgerät über den ersten Kommunikationsweg ausgebildet ist, und eine zweite Datenübertragungseinheit auf, die zur kabellosen Kurzreichweitenkommunikation mit einem Gateway über den zweiten Kommunikationsweg ausgebildet ist. Dies ermöglicht insbesondere, dass unterschiedliche Arten der Kommunikation einerseits mit dem Mobilgerät und andererseits mit dem Gateway eingesetzt werden können. Insbesondere können auch unterschiedliche Kommunikationsstandards eingesetzt werden, die eine jeweils andere Hardwarekonfiguration der Datenübertragungseinheiten benötigen.

Hinsichtlich der Kommunikationsstandards, die von der zumindest einen Datenübertragungseinheit zur Kommunikation eingesetzt werden können, sieht die Erfindung zwei Ausführungsvarianten vor. In der ersten Ausführungsvariante ist die zumindest eine Datenübertragungseinheit dazu ausgebildet, über den ersten Kommunikationsweg und den zweiten Kommunikationsweg nach demselben Kommunikationsstandard zu kommunizieren. Dies hat den Vorteil, dass die Softwareimplementierung im Spender einfacher durchzuführen ist und ein einheitliches Kommunikationsprotokoll verwendet werden kann.

In der zweiten Ausführungsvariante, die zur vorgenannten ersten Ausführungsvariante alternativ ist, ist die zumindest eine Datenübertragungseinheit dazu ausgebildet, über den ersten Kommunikationsweg und den zweiten Kommunikationsweg nach unterschiedlichen Kommunikationsstandards zu kommunizieren. Dies wird insbesondere dazu eingesetzt, wenn die Kommunikationsverbindungen des Spenders mit dem Gateway bzw. mit dem Mobilgerät individualisiert werden sollen. Beispielsweise kann für die Kommunikation mit dem Mobilgerät ein Kommunikationsstandard eingesetzt werden, der eine Kommunikation mit dem Mobilgerät nur aus einer Entfernung zum Spender zulässt, die geringer ist als jene Entfernung, die der Kommunikationsstandard zur Kommunikation mit dem Gateway zulässt. Beispielweise können damit mehrere Spender innerhalb eines Gebäudes gleichzeitig mit einem einzigen Gateway verbunden werden, wohingegen das Mobilgerät immer nur in einer 1-zu-1-Verbindung mit einem der Spender steht, da die maximale Kommunikationsdistanz des Mobilgeräts mit dem Spender geringer ist als die maximale Kommunikationsdistanz des Mobilgeräts mit dem Gateway.

Insbesondere ist bevorzugt, wenn die zumindest eine Datenübertragungseinheit zur Kommunikation über den ersten und den zweiten Kommunikationsweg gemäß einem Bluetooth-Standard, einem DSRC-Standard, einem RFID-Standard, einem NFC-Standard, einem Thread-Standard und/oder einem WiFi-Standard ausgebildet ist. Diese Kommunikationsstandards haben sich insbesondere für die erfindungsgemäße Lösung des Spenders mit zwei Kommunikationswegen bewährt.

In einer bevorzugten Ausführungsform ist die zumindest eine Datenübertragungseinheit dazu ausgebildet, zwischen der Kurzreichweitenkommunikation mit dem Mobilgerät über den ersten Kommunikationsweg und der Kurzreichweitenkommunikation mit dem Gateway über den zweiten Kommunikationsweg umzuschalten, in Abhängigkeit davon, ob das Mobilgerät oder das Gateway zur Kommunikation verfügbar ist. Der Spender kann somit feststellen, welche Kommunikationsmöglichkeiten zur Verfügung stehen und eine Auswahl treffen, ob zwischen zwei Kommunikationen umgeschaltet werden soll.

In der vorgenannten Ausführungsform ist es möglich, dass einem der beiden Kommunikationswege eine Priorität eingeräumt werden kann, wodurch eine Kommunikation über einen der Kommunikationswege bevorzugt wird, wenn beide Kommunikationsmöglichkeiten zur Verfügung stehen. Bevorzugt ist jedoch, wenn die zumindest eine Datenübertragungseinheit dazu ausgebildet ist, gleichzeitig sowohl mit dem Mobilgerät über den ersten Kommunikationsweg als auch mit dem Gateway über den zweiten Kommunikationsweg zu kommunizieren, wenn das Mobilgerät und das Gateway zur Kommunikation verfügbar sind. Dadurch wird verhindert, dass eine der Kommunikationen unterbrochen werden muss.

In einer bevorzugten Ausführungsform ist der Spender dazu ausgebildet, an das Mobilgerät über den ersten Kommunikationsweg und das Gateway über den zweiten Kommunikationsweg Gerätedaten zu senden, wobei die Gerätedaten vorzugsweise Betriebsparameter, Statusdaten, Spendereinstellungsdaten und/oder Meldungen umfassen. Diese Gerätedaten ermöglichen, dass die Funktionsfähigkeit des Spenders sowohl im Server als auch im Mobilgerät festgestellt werden kann. Alternativ oder zusätzlich wird ermöglicht, dass ein Betriebsverhalten bzw. eine Auslastung des Spenders ermittelt werden kann. Die Auswertung im Server hat den Vorteil, dass das Verhalten bzw. der Zustand des Spenders zentral ausgewertet werden kann und bei Bedarf gezielt ein Servicepersonal zum jeweiligen Spender geschickt werden kann, wenn dies erforderlich ist. Die Auswertung im Mobilgerät hat den Vorteil, dass Servicepersonal bei einer Begehung des Spenders feststellen kann, ob beispielsweise Sanitär- oder Hygieneprodukt nachgefüllt werden soll, ohne dass der Spender geöffnet werden müsste. Die Gerätedaten können insbesondere eine Stromaufnahme, Gerätetemperatur, Füllstand, gespeicherte Fehlermeldungen, Abgabezähler, Betriebsstundenzähler oder Batterieladezustand umfassen, sodass das Betriebsverhalten bzw. der Zustand des Spenders aus verschiedenen Richtungen ausgewertet werden kann.

In der letztgenannten Ausführungsform ist der Spender bevorzugt dazu ausgebildet, mit dem Mobilgerät über den ersten Kommunikationsweg nach dem Bluetooth-Standard zu kommunizieren und ist weiters bevorzugt dazu ausgebildet, in den Bluetooth-Advertising-Daten Statusdaten des Spenders zu senden. Dies ist besonders vorteilhaft, da beim Bluetooth Advertising kein Verbindungsaufbau zwischen zwei Geräten zur Datenübertragung erforderlich ist. Dies ist deshalb möglich, da das Bluetooth Advertising ein Broadcast-Signal umfasst, das von allen Bluetooth-Geräten in der Reichweite des Spenders ausgelesen werden kann.

In einer weiteren bevorzugten Ausführungsform ist der Spender dazu ausgebildet, vom Mobilgerät über den ersten Kommunikationsweg und/oder vom Gateway über den zweiten Kommunikationsweg Spendereinstellungsdaten zu empfangen und im Spender Einstellungen gemäß den empfangenen Spendereinstellungsdaten vorzunehmen. Dadurch kann der Spender entweder von der Zentrale aus oder durch das Mobilgerät eingestellt werden, insbesondere kalibriert werden. Die Einstellmöglichkeit von der Zentrale aus bietet insbesondere die Möglichkeit, den Spender in eine andere Betriebseinstellung zu versetzen, ohne dass eine Servicekraft zum Spender geschickt werden müsste. Beispielsweise könnten einer oder mehrere der Spender gleichzeitig in einen Stromsparmodus versetzt werden. Die Einstellmöglichkeit über die Servicekraft hat insbesondere den Vorteil, dass eine Servicekraft den Spender vor Ort einstellen kann. Wenn das Servicepersonal beispielsweise nach Besichtigung oder einem Testbetrieb des Spenders feststellt, dass dieser zu viel Sanitär- oder Hygieneprodukt ausgibt, kann das Servicepersonal den Spender vor Ort einstellen, ohne dass vom Mobilgerät eine gesonderte Nachricht an den Server gesandt werden müsste, was jedoch auch vorgesehen werden könnte, wenn beispielsweise eine Kommunikationsverbindung über den ersten Kommunikationsweg nicht herstellbar ist.

Weiters kann der Spender eine von außen sichtbare Anzeige aufweisen, an der Statusdaten des Spenders anzeigbar sind. Im Zusammenspiel mit der Kommunikationsmöglichkeit mit dem Mobilgerät hat dies den Vorteil, dass die Kommunikationsverbindung mit dem Mobilgerät nur dann hergestellt werden muss, wenn Servicepersonal dies nach einem Blick auf die Statusdaten der Anzeige für notwendig erachtet.

Erfindungsgemäß ist überdies ein Spendersystem vorgesehen, das sich aus zumindest einem Spender nach einer der vorgenannte Ausführungsformen, zumindest einem Mobilgerät, zumindest einem Gateway und zumindest einem mit dem zumindest einen Gateway kommunizierenden Server zusammensetzt. In seiner Gesamtheit weist das Spendersystem die Vorteile des erfindungsgemäßen Sensors auf.

In diesem Spendersystem ist das Mobilgerät bevorzugt als Mobiltelefon, insbesondere Smartphone, oder als Tablet-Computer, oder als Laptop-Computer, oder als Smartwatch ausgebildet. Dadurch ist das Mobilgerät besonders mobil ausgebildet, sodass es leicht von einem Servicepersonal mitgeführt werden kann.

Weiters ist bevorzugt, wenn das Mobilgerät dazu ausgebildet ist, vom Spender über den ersten Kommunikationsweg erhaltene Daten an den entfernten Server weiterzuleiten. Dies hat den Vorteil, dass die Daten im Server stets aktuell geführt werden können, selbst wenn der Spender mittels des Mobilgeräts manuell ausgelesen wird. Kann der Spender beispielsweise keine Kommunikationsverbindung mit dem Gateway aufbauen, so ist es weiterhin möglich, ausgelesene Daten des Spenders an den Server zu senden, um diesen aktuell zu halten.

In einer bevorzugten Ausführungsform stellt das Mobilgerät eine Eingabemöglichkeit für Spendereinstellungsdaten bereit und sendet Spendereinstellungsdaten über den ersten Kommunikationsweg an den Spender. Dies kann dazu eingesetzt werden, dass das Servicepersonal eine Betriebseinstellung des Spenders anpassen kann, indem ein gewünschter Wert in das Mobilgerät eingegeben und an den Spender gesendet wird. Insbesondere kann in dieser Ausführungsform der Spender kalibriert werden, indem das Servicepersonal Sanitär- oder Hygieneprodukte aus dem Spender ausgibt, eine Eigenschaft wie ein Ausgabevolumen oder eine Schaumqualität des ausgegebenen Sanitär- oder Hygieneprodukts bestimmt, einen Verstellwert in das Mobilgerät eingibt und an den Spender sendet, um diesen in einem Trial-and-Error-Verfahren zu kalibrieren.

In einer weiteren bevorzugten Ausführungsform kann der Server dazu ausgebildet sein, Spendereinstellungsdaten bereitzustellen und die Spendereinstellungsdaten über das Gateway und/oder über das Mobilgerät an den Spender zu senden, wobei das Mobilgerät zur Weiterleitung der vom Server erhaltenen Spendereinstellungsdaten an den Spender ausgebildet ist. Dadurch kann ein Aktualisieren des Spenders aus der Ferne, d.h. vom Server aus, besonders effizient erzielt werden. Sollte der Spender eine Kommunikationsverbindung mit dem Gateway aufweisen, könnten die Spendereinstellungsdaten über das Gateway geschickt werden. Anderenfalls, beispielsweise wenn das Gateway nicht vorhanden oder defekt ist, kann der Spender mit den Spendereinstellungsdaten manuell aktualisiert werden, indem die Spendereinstellungsdaten an das Mobilgerät gesendet werden und der Spender mit den Spendereinstellungsdaten aktualisiert wird, sobald das Mobilgerät in die Kommunikationsreichweite des Spenders gelangt.

Vorteilhafte und nicht einschränkende Ausführungsformen der Erfindung werden nachfolgend anhand der Zeichnungen näher erläutert.

Figur 1 zeigt einen Spender zur Ausgabe eines Hygienefluids.

Figur 2 zeigt ein Spendersystem, umfassend den Spender der Figur 1, ein Mobilgerät, ein Gateway und einen Server in einer ersten Ausführungsform.

Figur 3 zeigt ein Spendersystem in einer zweiten Ausführungsform, die zur Ausführungsform der Figur 2 alternativ ist.

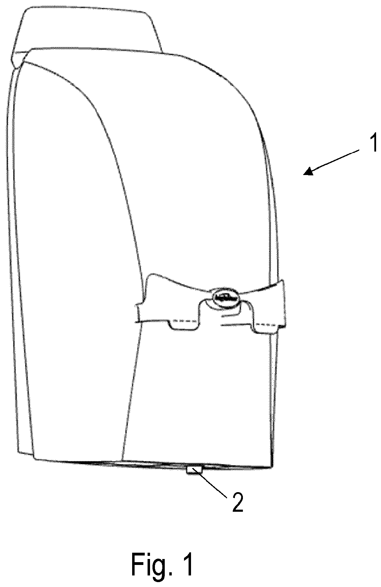

Figur 1 zeigt einen Spender 1 zur Ausgabe eines Hygienefluids, beispielsweise einer Seife, eines Reinigungs-, Pflege- oder Desinfektionsmittels. In der vorliegenden Ausführungsform gibt der Spender 1 Hygienefluid aus einer unterseitig angeordneten Auslassöffnung 2 aus. In einer anderen Ausführungsform könnte der Spender 1 jedoch auch Papier ausgeben und hierzu entsprechend ausgebildet sein. Im Allgemeinen sind somit Sanitär- oder Hygieneprodukte vom Spender 1 ausgebbar. Das Sanitär- oder Hygieneprodukt ist im oder am Spender 1 gelagert, sodass der Spender 1 beispielsweise einen Behälter für eine Seife oder einen Lagerraum für eine Papierrolle aufweisen kann.

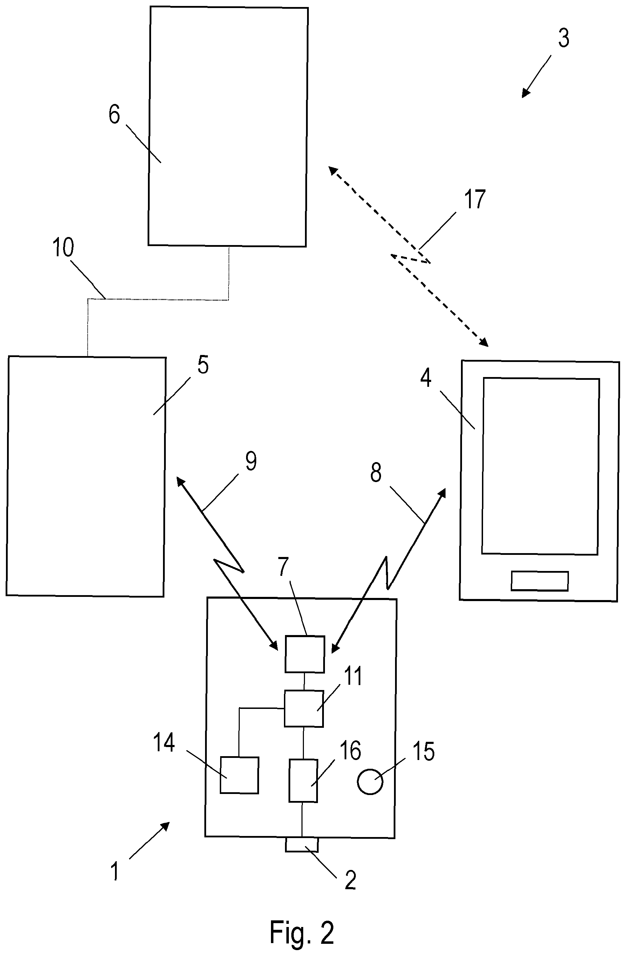

Figur 2 zeigt, dass der Spender 1 Teil eines Spendersystems 3 ist, das neben dem Spender 1 ein Mobilgerät 4, ein Gateway 5 und einen Server 6 umfasst. Das Mobilgerät 4 kann beispielsweise ein Smartphone, Tablet-Computer, Laptop-Computer oder eine Smartwatch sein, sodass das Mobilgerät 4 leicht von einem Servicepersonal mitgeführt werden kann. Das Gateway 5 ist als stationäre Einheit ausgebildet, sodass das Gateway 5 beispielsweise in einem IT-Raum eines Gebäudes aufgestellt werden kann, um mit einem oder mehreren Spendern 1 zu kommunizieren. Auch der Server 6 ist üblicherweise als stationäre Einheit ausgebildet und befindet sich in der Regel in einem anderen Gebäude als das Gateway 5. Je nach Ausführungsform können das Gateway 5 bzw. der Server 6 auch mobil bzw. teilmobil ausgebildet sein.

Damit der Spender 1 einerseits mit dem Mobilgerät 4 und andererseits mit dem Server 6 über das Gateway 5 kommunizieren kann, weist der Spender 1 gemäß der Ausführungsform von Figur 2 eine Datenübertragungseinheit 7 auf. Die Datenübertragungseinheit 7 ist zu diesem Zweck zur kabellosen Kurzreichweitenkommunikation mit einem Mobilgerät 4 über einen ersten Kommunikationsweg 8 und zur kabellosen Kurzreichweitenkommunikation mit dem Gateway 5 über einen zweiten Kommunikationsweg 9 ausgebildet. Das Gateway 5 ist wiederum zur Kommunikation mit dem Server 6 über einen dritten Kommunikationsweg 10 ausgebildet, was entweder kabelgebunden oder kabellos, beispielsweise über ein Mobilfunknetzwerk, erfolgen kann.

In der Ausführungsform der Figur 2 wird somit eine einzige Datenübertragungseinheit 7 eingesetzt, die zur Kommunikation über zwei verschiedene Kommunikationswege 8, 9 ausgebildet ist. Hierbei kann vorgesehen werden, dass die Kommunikation über den ersten Kommunikationsweg 8 und über den zweiten Kommunikationsweg 9 nach demselben oder einem anderen Kommunikationsstandard durchgeführt wird. Wenn die Kommunikation nach verschiedenen Kommunikationsstandards durchgeführt wird, ist darauf zu achten, dass die Datenübertragungseinheit 7 beide Kommunikationsstandards unterstützt. Als Beispiel könnte die Datenübertragungseinheit 7 mit dem Mobiltelefon 4 über ein "Bluetooth Low Energy"-Protokoll und mit dem Gateway 5 über ein "Thread"-Protokoll kommunizieren. In einer anderen Ausführungsform kommuniziert die Datenübertragungseinheit 7 sowohl mit dem Mobiltelefon 4 als auch mit dem Gateway 5 über ein "Bluetooth Low Energy"-Protokoll.

Protokolle bzw. Kommunikationsstandards, die zur kabellosen Kurzreichweitenkommunikation zwischen der Datenübertragungseinheit 7 und dem Mobiltelefon 4 und/oder dem Gateway 5 eingesetzt werden können, sind neben Bluetooth und Thread überdies DSRC (Dedicated Short Range Communication), RFID (Radio Frequency Identification), NFC (Near Field Communication) oder WiFi. Unter den Begriff der unterschiedlichen Kommunikationsstandards bzw. Protokolle fallen auch unterschiedliche Varianten eines Protokolls bzw. Standards. So werden "Bluetooth Low Energy" und "Bluetooth Advertising" als unterschiedliche Kommunikationsstandards angesehen.

Je nach gewähltem Kommunikationsstandard gibt es eine unterschiedliche maximale Distanz, in der sich der Spender 1 und das Mobilgerät 4 bzw. das Gateway 5 befinden müssen, um eine Kommunikationsverbindung herzustellen. Wird eine NFC-Standard gewählt, wird dieser eine geringere maximale Kommunikationsdistanz als ein Bluetooth-Standard haben. Unter dem Begriff der kabellosen Kurzreichweitenkommunikation kann somit eine kabellose Kommunikation verstanden werden, die eine maximale Kommunikationsdistanz aufweist. Eine Kommunikation über ein zelluläres Mobilfunknetzwerk fällt somit nicht darunter.

In einer praktischen Ausführungsform können in einem Gebäude, beispielsweise in einem öffentlichen Gebäude wie einem Krankenhaus, ein Gateway 5 und mehrere Spender 1 aufgestellt werden, die jeweils mit dem Gateway 5 verbunden sind. In einem anderen Gebäude oder in einem gesonderten Raum des Gebäudes kann der Server 6 aufgestellt werden, der alle Spender 1 überwacht. Der Spender 6 kann auch weitere Spender 1 überwachen, die sich in einem anderen Gebäude befinden, zu welchem Zweck ein weiteres Gateway 6 eingesetzt werden kann, welches eine Kommunikation zwischen dem Server 6 und den weiteren Spendern 1 ermöglicht. Das Servicepersonal, das die Spender wartet, ist mit einem Mobilgerät 4 ausgestattet und begeht die Spender 1 in regelmäßigen Abständen oder bei Bedarf, beispielsweise nach einer Anweisung basierend auf den Daten des Servers 6. Sobald das Servicepersonal in die Kommunikationsreichweite der Spender 1 kommt, kann dieses über das Mobilgerät 4 selbst mit dem Spender 1 kommunizieren und diesen gegebenenfalls warten.

Mit der Datenübertragungseinheit 7 ist in der Regel eine Recheneinheit 11 verbunden, welche die Datenübertragungseinheit 7 steuert und weitere Aufgaben erfüllen kann. Beispielsweise kann die Recheneinheit 11 steuern, mit welchen Mobilgeräten 4 bzw. mit welchen Gateways 5 eine Kommunikation vorgenommen werden darf. Weiters kann die Recheneinheit 11 einen Speicher umfassen, in welchem zu sendende und/oder empfangene Daten hinterlegt sind.

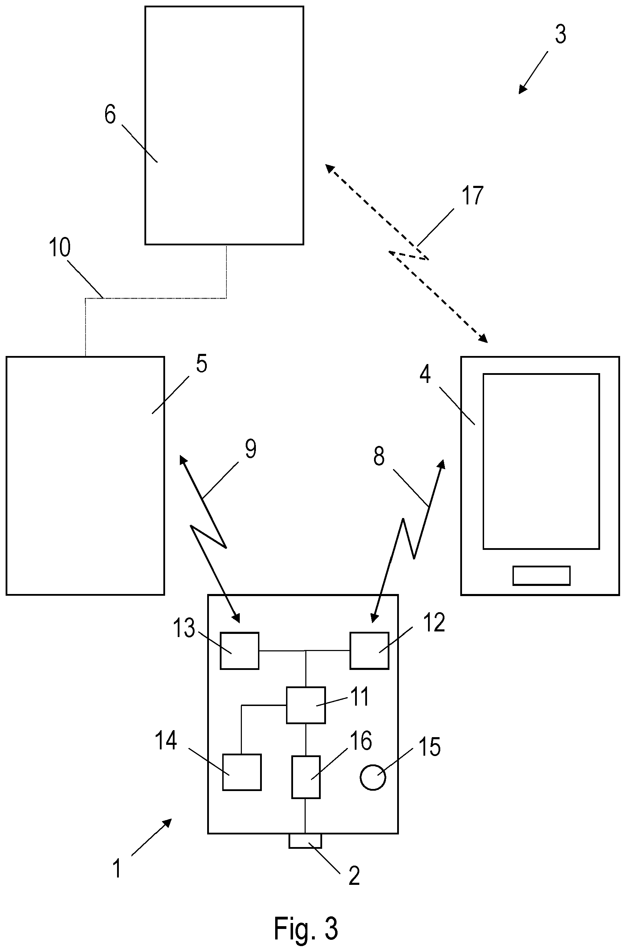

Wie in Figur 3 dargestellt kann anstelle eines Spenders 1 mit einer einzigen Datenübertragungseinheit 7 vorgesehen werden, dass der Spender 1 eine erste Datenübertragungseinheit 12 aufweist, die zur kabellosen Kurzreichweitenkommunikation mit dem Mobilgerät 4 über den ersten Kommunikationsweg 8 ausgebildet ist, und eine zweite Datenübertragungseinheit 13 aufweist, die zur kabellosen Kurzreichweitenkommunikation mit dem Gateway 5 über den zweiten Kommunikationsweg 9 ausgebildet ist.

Die erste Datenübertragungseinheit 12 ist somit für die Kommunikation mit dem Mobilgerät 4 vorgesehen und die zweite Datenübertragungseinheit 13 für die Kommunikation mit dem Gateway 5. Sollte eine der Datenübertragungseinheiten 12, 13 defekt sein, steht weiterhin die jeweils andere Datenübertragungseinheit für die Kommunikation zur Verfügung.

Die Datenübertragungseinheiten 12, 13 können derart ausgebildet sein, dass diese über denselben Kommunikationsstandard oder nach einem jeweils anderen Kommunikationsstandard kommunizieren. Bei dieser Ausführungsform können dieselben Kommunikationsstandards eingesetzt werden, die oben in Zusammenhang mit der Ausführungsform der Figur 2 erläutert wurden.

Die in Figur 2 dargestellte Datenübertragungseinheit 7 bzw. die in den Figur 3 dargestellten Datenübertragungseinheiten 12, 13 können überdies dazu ausgebildet sein, die Kommunikationsfähigkeit mit dem Mobilgerät 4, bzw. dem Gateway 5 festzustellen. Kann die Datenübertragungseinheit 7 bzw. 12 somit keine Kommunikation mit dem Mobilgerät 4 eingehen, beispielsweise da sich das Mobilgerät 4 außerhalb einer maximalen Kommunikationsreichweite befindet, wird lediglich eine Kommunikation auf dem zweiten Kommunikationsweg 9 durchgeführt. Sollte in ähnlicher Weise eine Kommunikation auf dem zweiten Kommunikationsweg 9 mit dem Gateway 5 nicht möglich sein, beispielsweise wenn dieses defekt ist oder einfach nicht in der Reichweite des Spenders 1 aufgestellt wurde, wird lediglich eine Kommunikation auf dem ersten Kommunikationsweg 8 durchgeführt.

Wenn die Datenübertragungseinheit 7 bzw. die Datenübertragungseinheiten 12, 13 jedoch detektieren, dass die Datenübertragungseinheit dazu ausgebildet ist, gleichzeitig sowohl mit dem Mobilgerät 4 über den ersten Kommunikationsweg 8 als auch mit dem Gateway 5 über den zweiten Kommunikationsweg 9 zu kommunizieren, wenn das Mobilgerät 4 und das Gateway 5 zur Kommunikation verfügbar sind. Wenn eine einzige Datenübertragungseinheit 7 dazu eingesetzt wird, gleichzeitig über den ersten und über den zweiten Kommunikationsweg 8, 9 zu kommunizieren, kann dies beispielsweise über entsprechende Multiplexing-Verfahren erfolgen. Alternativ dazu kann auch eine Priorität der Kommunikationswege 8, 9 vorgesehen werden, sodass beispielsweise entweder der erste Kommunikationsweg 8 oder der zweite Kommunikationsweg 9 eingesetzt wird, auch wenn eine Kommunikation über beide Kommunikationswege 8, 9 durchgeführt werden könnte.

Für die oben genannten Funktionen kann auch die oben erläuterte Recheneinheit 11 vorgesehen werden, die die Verfügbargeit der jeweiligen Kommunikationswege 8, 9 überwachen und steuern kann, über welchen der Kommunikationswege 8, 9 eine Kommunikation erfolgen soll.

Die Kommunikation über den jeweiligen Kommunikationsweg 8, 9 kann bidirektional erfolgen, d.h. vom Spender 1 können einerseits Daten an das Mobilgerät 4 bzw. an das Gateway 5 gesandt werden und andererseits kann der Spender 1 Daten vom Mobilgerät 4 bzw. vom Gateway 5 empfangen. Je nach Ausführungsform kann die Kommunikation jedoch auch unidirektional erfolgen, d.h. der Spender 1 kann Daten entweder nur empfangen oder nur senden.

Wenn der Spender 1 dazu ausgebildet ist, an das Mobilgerät 4 über den ersten Kommunikationsweg 8 und das Gateway 5 über den zweiten Kommunikationsweg 9 Daten zu senden, sind dies insbesondere Gerätedaten, beispielsweise Betriebsparameter, Statusdaten, Spendereinstellungsdaten und/oder Meldungen. Gerätedaten können Daten sein, die entweder in einem Speicher des Spenders 1 hinterlegt sind oder von einem Sensor 14 des Spenders 1 gemessen werden.

Wie in den Figuren 2 und 3 dargestellt kann der Spender 1 beispielsweise den genannten Sensor 14 umfassen, der dazu ausgebildet ist, Betriebsparameter oder Statusdaten des Spenders 1 zu messen. Beispielsweise kann der Sensor 14 dazu ausgebildet sein, einen Füllstand des Sanitär- oder Hygieneprodukts im Spender 1 zu messen. Ist der Spender 1 batteriebetrieben, kann der Sensor 14 beispielsweise einen Batteriefüllstand messen. Alternativ oder zusätzlich könnte der Sensor 14 messen, ob eine andere Stromquelle an den Spender 1 angeschlossen ist, und dies als Statusdaten ausgeben.

Beispielsweise kann der Spender 1 anhand der gemessenen Daten ermitteln, ob ein Serviceeingriff erforderlich ist, und beispielsweise dieses Signal über die Datenübertragungseinheit 7 bzw. die Datenübertragungseinheiten 12, 13 an das Mobilgerät 4 bzw. das Gateway 5 senden. Alternativ oder zusätzlich dazu kann auch ein Signal zur Anzeige der Art des erforderlichen Serviceeingriffs an das Mobilgerät 4 bzw. das Gateway 5 gesendet werden, d.h. ob ein Nachfüllen des Sanitär- oder Hygieneprodukts, eine Behebung einer Verstopfung im Spender 1 oder eine sonstige konkrete Wartungshandlung notwendig ist.

Wenn der Spender 1 wie unten im Detail erläutert eingestellt werden kann, sei es über das Mobilgerät 4, den Server 6 oder eine mechanische Stelleinrichtung, können diese Spendereinstellungsdaten in einem Speicher des Spenders 1 hinterlegt werden. Zu einem späteren Zeitpunkt können diese gespeicherten Daten wieder ausgelesen werden und als Gerätedaten an das Mobilgerät 4 und bzw. an das Gateway 5 gesandt werden. Wenn der Spender 1 eine Recheneinheit 11 aufweist, kann diese Meldungen erzeugen, die Fehlermeldungen darstellen können oder in denen beispielsweise ein Protokoll über die Benutzung des Spenders gespeichert wird. Auch diese Meldungen können in der Folge als Gerätedaten an das Mobilgerät 4 und bzw. an das Gateway 5 gesandt werden.

Die an das Mobilgerät 4 bzw. das Gateway 5 gesandten Gerätedaten können auch ein Signal zur Anzeige eines erforderlichen Serviceeingriffs oder ein Signal zur Anzeige der Art des erforderlichen Serviceeingriffs sein. In einer besonders praxisrelevanten Ausführungsform wir am Spender 1 mittels einer von außen sichtbaren Anzeige 15 lediglich angezeigt, dass ein Serviceeingriff erforderlich ist, beispielsweise mittels eines roten oder orangen LEDs (Light Emitting Diode). Jedoch wird keine Leuchtanzeige für die Anzeige der konkreten Art des erforderlichen Serviceeingriffs vorgesehen, da dies für einen Benutzer des Spenders 1, der keine Wartungsarbeiten am Spender 1 vornimmt, uninteressant ist. Aus dem Stand der Technik ist lediglich bekannt, dass im Inneren des Spenders 1 eine Leuchtanzeige vorgesehen werden kann, sodass ein Servicepersonal erst nach Öffnen des Spenders 1 ermitteln kann, welche Art von Serviceeingriff tatsächlich erforderlich ist. Erfindungsgemäß kann nun jedoch darauf verzichtet werden, den Spender 1 öffenbar auszugestalten, da erfindungsgemäß ein Signal zur Anzeige der Art des erforderlichen Serviceeingriffs an die Datenübertragungseinheit 7 bzw. die Datenübertragungseinheiten 12, 13 an das Mobilgerät 4 bzw. das Gateway 5 gesendet werden kann. Weiterhin kann der erfindungsgemäße Spender 1 eine von außen sichtbare Anzeige 15 aufweisen, die nach Außen ein Signal ausgibt, dass der Spender 1 einen Serviceeingriff benötigt. Dies ist insbesondere für Servicepersonal relevant, da dieses die Spender 1 begehen kann und erst dann eine Kommunikation über das Mobilgerät 4 mit dem Spender 1 herstellt, wenn angezeigt wird, dass ein Serviceeingriff erforderlich ist.

Wenn Statusdaten des Spenders 1 an das Mobilgerät 4 bzw. das Gateway 5 gesandt werden, bietet sich insbesondere an, dass der Spender 1 mit dem Mobilgerät 4 über den ersten Kommunikationsweg 8 nach dem Bluetooth-Standard kommuniziert und in den Bluetooth-Advertising-Daten Statusdaten des Spenders 1 zu senden, da hierfür kein gesonderter Aufbau einer Kommunikationsverbindung notwendig ist.

Weiters ist in den Figuren 2 und 3 dargestellt, dass der Spender 1 eine Stelleinrichtung 16 aufweisen kann. Diese Stelleinrichtung 16 kann beispielsweise ein Ventil oder ein Zeitschalter sein, um den Durchfluss bei der Ausgabe des Sanitär- oder Hygieneprodukts einzustellen. Die Stelleinrichtung 16 könnte jedoch auch eine Stromzufuhr des Spenders 1 regeln, um den Spender 1 in einen Stromsparmodus zu versetzen.

Um die Stelleinrichtung 16 anzusteuern, kann der Spender 1 von dem Mobilgerät 4 über den ersten Kommunikationsweg 8 und/oder vom Gateway 5 über den zweiten Kommunikationsweg 9 Spendereinstellungsdaten empfangen und im Spender 1 Einstellungen gemäß den empfangenen Spendereinstellungsdaten vorzunehmen. Dadurch kann eine Einstellung des Spenders 1 verändert werden, ohne dass eine mechanische Einheit des Spenders 1 manuell betätigt werden müsste.

Zum Zwecke der Einstellung des Spenders 1 ist eine Stelleinrichtung 16 wie dargestellt jedoch nicht zwingend nötig. Wie oben bereits angedeutet kann der Spender 1 auch eine von außen sichtbare Anzeige 15 aufweisen, an welcher Statusdaten des Spenders 1 anzeigbar sind, wie beispielsweise eine Anzeige eines erforderlichen Serviceeingriffs. Je nach Ausführungsform kann die Anzeige 15 als eine oder mehrere Leuchtdioden, beispielsweise mehrfarbige Leuchtdioden, oder auch als alphanumerische oder grafische Anzeige ausgebildet sein. Die Anzeige 15 kann entweder Daten anzeigen, die von der Recheneinheit 11 des Spenders 1 erzeugt wurden, oder auch vom Mobilgerät 4 oder vom Server 6 empfangene Daten. In der Praxis kann beispielsweise vorgesehen werden, dass der Spender 1 zuerst Spenderdaten wie einen Füllstand an das Mobilgerät 4 oder an den Server 6 sendet. Wenn das Mobilgerät 4 oder der Server 6 feststellt, dass ein baldiger Serviceeingriff notwendig ist, kann vom Mobilgerät 4 oder dem Server 6 eine entsprechende Nachricht an den Spender 1 gesandt werden, um die Anzeige 15 entsprechend anzusteuern.

Die Information, die über die Anzeige 15 anzeigt werden kann, ist beispielsweise die Betriebsbereitschaft, ein notwendiger Serviceeingriff oder ähnliches. Auch könnte unmittelbar der Füllstand des Sanitär- oder Hygieneprodukts oder eine andere Zustandsanzeige des Spenders 1 angezeigt werden.

In den Figuren 2 und 3 ist weiters dargestellt, dass zwischen dem Mobilgerät 4 und dem Server 6 ein vierter Kommunikationsweg 17 vorgesehen werden kann, um Nachrichten zwischen dem Spender 1 und dem Server 6 auszutauschen, auch wenn der Spender 1 nicht mit dem Gateway 5 oder das Gateway nicht mit dem Server 6 kommunizieren kann.

In einer Ausführungsform kann dies dazu eingesetzt werden, damit das Mobilgerät 4 vom Spender 1 über den ersten Kommunikationsweg 8 erhaltene Daten an den entfernten Server 6 weiterleitet. Diese Funktion kann dazu eingesetzt werden, Daten des Spenders 1 im Server aktuell zu halten, auch wenn das Gateway 5 nicht erreichbar ist. In diesem Fall könnte der Server 6 auch Daten an das Mobilgerät 4 senden, welches diese in der Folge an den Spender 1 weiterleitet, um eine Redundanz zum Gateway 5 zu schaffen.

Der vierte Kommunikationsweg 17 schafft in der Praxis weiters eine Möglichkeit, dass die Spendereinstellungen auch dann im Server 6 aktuell gehalten können, wenn diese durch das Mobilgerät 4 eingegeben werden. Beispielsweise kann hierzu die Servicekraft eine gewünschte Spendereinstellung in das Mobilgerät 4 eingeben, vorzugsweise mittels einer Tastatur des Mobilgeräts. Danach werden die Spendereinstellungen vom Mobilgerät 4 über den ersten Kommunikationsweg 8 erstens an den Spender 1 gesandt, um diesen einzustellen, und zweitens auch an den Server 6, sodass dieser weiß, in welchem Zustand sich der Spender 1 befindet.

Die Kommunikation zwischen Mobilgerät 4 und Server 6 über den vierten Kommunikationsweg 17 erfolgt in der Regel über ein zelluläres Mobilfunknetzwerk, d.h. beispielsweise über eine Kommunikation nach LTE (Long Term Evolution) GSM (Global System for Mobile Communications) oder UMTS (Universal Mobile Telecommunications System).

## Patentansprüche

1. Spender (1) für Sanitär- oder Hygieneprodukte, beispielsweise Seife, Papier, Reinigungsmittel, Desinfektionsmittel, Pflegemittel oder dergleichen,
wobei der Spender (1) zumindest eine Datenübertragungseinheit (7; 12, 13) aufweist, **dadurch gekennzeichnet, dass** die zumindest eine Datenübertragungseinheit (7; 12, 13) zur kabellosen Kurzreichweitenkommunikation mit einem Mobilgerät (4) über einen ersten Kommunikationsweg (8) und zur kabellosen Kurzreichweitenkommunikation mit einem mit einem entfernten Server (6) kommunizierenden Gateway (5) über einen zweiten Kommunikationsweg (9) ausgebildet ist.

2. Spender (1) nach Anspruch 1, **dadurch gekennzeichnet, dass** der Spender (1) eine einzige Datenübertragungseinheit (7) aufweist, die zur kabellosen Kurzreichweitenkommunikation mit dem Mobilgerät (4) über den ersten Kommunikationsweg (8) und zur kabellosen Kurzreichweitenkommunikation mit dem Gateway (5) über den zweiten Kommunikationsweg (9) ausgebildet ist.

3. Spender (1) nach Anspruch 1, **dadurch gekennzeichnet, dass** der Spender (1) eine erste Datenübertragungseinheit (12) aufweist, die zur kabellosen Kurzreichweitenkommunikation mit einem Mobilgerät (4) über den ersten Kommunikationsweg (8) ausgebildet ist, und eine zweite Datenübertragungseinheit (13) aufweist, die zur kabellosen Kurzreichweitenkommunikation mit einem Gateway (5) über den zweiten Kommunikationsweg (9) ausgebildet ist.

4. Spender nach einem der Ansprüche 1 bis 3, **dadurch gekennzeichnet, dass** die zumindest eine Datenübertragungseinheit (7; 12, 13) dazu ausgebildet ist, über den ersten Kommunikationsweg (8) und den zweiten Kommunikationsweg (9) nach demselben Kommunikationsstandard zu kommunizieren.

5. Spender (1) nach einem der Ansprüche 1 bis 3, **dadurch gekennzeichnet, dass** die zumindest eine Datenübertragungseinheit (7; 12, 13) dazu ausgebildet ist, über den ersten Kommunikationsweg (8) und den zweiten Kommunikationsweg (9) nach unterschiedlichen Kommunikationsstandards zu kommunizieren.

6. Spender (1) nach einem der Ansprüche 1 bis 5, wobei die zumindest eine Datenübertragungseinheit (7; 12, 13) zur Kommunikation über den ersten und den zweiten Kommunikationsweg (8, 9) gemäß einem Bluetooth-Standard, einem DSRC-Standard, einem RFID-Standard, einem NFC-Standard, einem Thread-Standard und/oder einem WiFi-Standard ausgebildet ist.

7. Spender (1) nach einem der Ansprüche 1 bis 6, **dadurch gekennzeichnet, dass** die zumindest eine Datenübertragungseinheit (7; 12, 13) dazu ausgebildet ist, zwischen der Kurzreichweitenkommunikation mit dem Mobilgerät (4) über den ersten Kommunikationsweg (8) und der Kurzreichweitenkommunikation mit dem Gateway (5) über den zweiten Kommunikationsweg (9) umzuschalten, in Abhängigkeit davon, ob das Mobilgerät (4) oder das Gateway (5) zur Kommunikation verfügbar ist.

8. Spender (1) nach Anspruch 7, **dadurch gekennzeichnet, dass** die zumindest eine Datenübertragungseinheit (7; 12, 13) dazu ausgebildet ist, gleichzeitig sowohl mit dem Mobilgerät (4) über den ersten Kommunikationsweg (8) als auch mit dem Gateway (5) über den zweiten Kommunikationsweg (9) zu kommunizieren, wenn das Mobilgerät (4) und das Gateway (5) zur Kommunikation verfügbar sind.

9. Spender (1) nach einem der Ansprüche 1 bis 8, **dadurch gekennzeichnet, dass** der Spender (1) dazu ausgebildet ist, an das Mobilgerät (4) über den ersten Kommunikationsweg (8) und das Gateway (5) über den zweiten Kommunikationsweg (9) Gerätedaten zu senden, wobei die Gerätedaten vorzugsweise Betriebsparameter, Statusdaten, Spendereinstellungsdaten und/oder Meldungen umfassen.

10. Spender (1) nach Anspruch 9, **dadurch gekennzeichnet, dass** der Spender (1) dazu ausgebildet ist mit dem Mobilgerät (4) über den ersten Kommunikationsweg (8) nach dem Bluetooth-Standard zu kommunizieren und weiters dazu ausgebildet ist, in den Bluetooth-Advertising-Daten Statusdaten des Spenders zu senden.

11. Spender (1) nach einem der Ansprüche 1 bis 10, **dadurch gekennzeichnet, dass** der Spender (1) dazu ausgebildet ist, von dem Mobilgerät (4) über den ersten Kommunikationsweg (8) und/oder vom Gateway (5) über den zweiten Kommunikationsweg (9) Spendereinstellungsdaten zu empfangen und im Spender (1) Einstellungen gemäß den empfangenen Spendereinstellungsdaten vorzunehmen.

12. Spender (1) nach einem der Ansprüche 1 bis 11, **dadurch gekennzeichnet, dass** der Spender (1) eine von außen sichtbare Anzeige aufweist, an der Statusdaten des Spenders (1) anzeigbar sind.

13. Spendersystem (3), umfassend zumindest einen Spender (1) nach einem der Ansprüche 1 bis 12, zumindest ein Mobilgerät (4), zumindest ein Gateway (5) und zumindest einen mit dem zumindest einen Gateway (5) kommunizierenden Server (6).

14. Spendersystem (3) nach Anspruch 13, **dadurch gekennzeichnet, dass** das Mobilgerät (4) als Mobiltelefon, insbesondere Smartphone, oder als Tablet-Computer, oder als Laptop-Computer, oder als Smartwatch ausgebildet ist.

15. Spendersystem (3) nach Anspruch 13 oder 14, **dadurch gekennzeichnet, dass** das Mobilgerät (4) dazu ausgebildet ist, vom Spender (1) über den ersten Kommunikationsweg erhaltene Daten an den entfernten Server (6) weiterzuleiten.

16. Spendersystem (3) nach einem der Ansprüche 13 bis 15, **dadurch gekennzeichnet, dass** das Mobilgerät (4) eine Eingabemöglichkeit für Spendereinstellungsdaten bereitstellt und Spendereinstellungsdaten über den ersten Kommunikationsweg an den Spender (1) sendet.

17. Spendersystem (3) nach einem der Ansprüche 13 bis 16, **dadurch gekennzeichnet, dass** der Server (6) dazu ausgebildet ist, Spendereinstellungsdaten bereitzustellen und die Spendereinstellungsdaten über das Gateway (5) und/oder über das Mobilgerät (4) an den Spender zu senden, wobei das Mobilgerät (4) zur Weiterleitung der vom Server (6) erhaltenen Spendereinstellungsdaten an den Spender (1) ausgebildet ist.

## Claims

1. A dispenser (1) for sanitary or hygiene products, such as soap, paper, cleaning agents, disinfectants, care products or the like, wherein the dispenser (1) has at least one data transmission unit (7; 12, 13), **characterized in that** the at least one data transmission unit (7; 12, 13) is designed for wireless short-range communication with a mobile device (4) via a first communication path (8) and for wireless short-range communication with a gateway (5) communicating with a remote server (6) via a second communication path (9).

2. The dispenser (1) according to claim 1, **characterized in that** the dispenser (1) has a single data transmission unit (7) which is designed for wireless short-range communication with the mobile device (4) via the first communication path (8) and for wireless short-range communication with the gateway (5) via the second communication path (9).

3. The dispenser (1) according to claim 1, **characterized in that** the dispenser (1) has a first data transmission unit (12) which is designed for wireless short-range communication with a mobile device (4) via the first communication path (8), and has a second data transmission unit (13) which is designed for wireless short-range communication with a gateway (5) via the second communication path (9).

4. The dispenser according to any of claims 1 to 3, **characterized in that** the at least one data transmission unit (7; 12, 13) is designed for communicating via the first communication path (8) and the second communication path (9) according to the same communication standard.

5. The dispenser (1) according to any of claims 1 to 3, **characterized in that** the at least one data transmission unit (7; 12, 13) is designed for communicating via the first communication path (8) and the second communication path (9) according to different communication standards.

6. The dispenser (1) according to any of claims 1 to 5, wherein the at least one data transmission unit (7; 12, 13) is designed for communication via the first and the second communication paths (8, 9) according to a Bluetooth standard, a DSRC standard, an RFID standard, an NFC standard, a thread standard and/or a WiFi standard.

7. The dispenser (1) according to any of claims 1 to 6, **characterized in that** the at least one data transmission unit (7; 12, 13) is designed for switching between the short-range communication with the mobile device (4) via the first communication path (8) and the short-range communication with the gateway (5) via the second communication path (9), depending on whether the mobile device (4) or the gateway (5) is available for communication.

8. The dispenser (1) according to claim 7, **characterized in that** the at least one data transmission unit (7; 12, 13) is designed for simultaneously communicating both with the mobile device (4) via the first communication path (8) and with the gateway (5) via the second communication path (9), if the mobile device (4) and the gateway (5) are available for communication.

9. The dispenser (1) according to any of claims 1 to 8, **characterized in that** the dispenser (1) is designed for sending device data to the mobile device (4) via the first communication path (8) and to the gateway (5) via the second communication path (9), the device data preferably comprising operating parameters, status data, dispenser setting data and/or messages.

10. The dispenser (1) according to claim 9, **characterized in that** the dispenser (1) is designed for communicating with the mobile device (4) via the first communication path (8) according to the Bluetooth standard and is furthermore designed for sending status data of the dispenser in the Bluetooth advertising data.

11. The dispenser (1) according to any of claims 1 to 10, **characterized in that** the dispenser (1) is designed for receiving dispenser setting data from the mobile device (4) via the first communication path (8) and/or from the gateway (5) via the second communication path (9) and for making settings in the dispenser (1) according to the received dispenser setting data.

12. The dispenser (1) according to any of claims 1 to 11, **characterized in that** the dispenser (1) has a display visible from the outside, on which status data of the dispenser (1) are displayable.

13. A dispensing system (3) comprising at least one dispenser (1) according to any of claims 1 to 12, at least one mobile device (4), at least one gateway (5) and at least one server (6) communicating with the at least one gateway (5).

14. The dispensing system (3) according to claim 13, **characterized in that** the mobile device (4) is designed as a mobile phone, in particular as a smartphone, or as a tablet computer, or as a laptop computer, or as a smart watch.

15. The dispensing system (3) according to claim 13 or 14, **characterized in that** the mobile device (4) is designed for forwarding data received from the dispenser (1) via the first communication path to the remote server (6).

16. The dispensing system (3) according to any of claims 13 to 15, **characterized in that** the mobile device (4) provides an input option for dispenser setting data and sends dispenser setting data to the dispenser (1) via the first communication path.

17. The dispensing system (3) according to any of claims 13 to 16, **characterized in that** the server (6) is designed for providing dispenser setting data and for sending the dispenser setting data to the dispenser via the gateway (5) and/or via the mobile device (4), the mobile device (4) being designed for forwarding the dispenser setting data received from the server (6) to the dispenser (1).

## Revendications

1. Distributeur (1) pour produits sanitaires ou hygiéniques tels que, par exemple, du savon, du papier, du produit de nettoyage, du désinfectant, du produit d'entretien ou autre produit similaire, lequel distributeur (1) comporte au moins une unité de transmission de données (7 ; 12, 13), **caractérisé en ce que** l'au moins une unité de transmission de données (7 ; 12, 13) est conçue pour la communication de courte portée sans fil avec un appareil mobile (4) sur une première voie de communication (8) et pour la communication de courte portée sans fil avec une passerelle (5) communiquant avec un serveur distant (6) sur une deuxième voie de communication (9).

2. Distributeur (1) selon la revendication 1, **caractérisé en ce que** ce distributeur (1) comporte une unité de transmission de données (7) qui est conçue pour la communication de courte portée sans fil avec l'appareil mobile (4) sur la première voie de communication (8) et pour la communication de courte portée sans fil avec la passerelle (5) sur la deuxième voie de communication (9).

3. Distributeur (1) selon la revendication 1, **caractérisé en ce que** ce distributeur (1) comporte une première unité de transmission de données (12) qui est conçue pour la communication de courte portée sans fil avec un appareil mobile (4) sur la première voie de communication (8), et comporte une deuxième unité de transmission de données (13) qui est conçue pour la communication de courte portée sans fil avec une passerelle (5) sur la deuxième voie de communication (9).

4. Distributeur selon une des revendications 1 à 3, **caractérisé en ce que** l'au moins une unité de transmission de données (7 ; 12, 13) est conçue pour communiquer sur la première voie de communication (8) et sur la deuxième voie de communication (9) selon le même standard de communication.

5. Distributeur (1) selon une des revendications 1 à 3, **caractérisé en ce que** l'au moins une unité de transmission de données (7 ; 12, 13) est conçue pour communiquer sur la première voie de communication (8) et sur la deuxième voie de communication (9) selon des standards de communication différents.

6. Distributeur (1) selon une des revendications 1 à 5, dans lequel l'au moins une unité de transmission de données (7 ; 12, 13) est conçue pour communiquer sur les première et deuxième voies de communication (8, 9) selon un standard Bluetooth, un standard DSRC, un standard RFID, un standard NFC, un standard Thread et/ou un standard WiFi.

7. Distributeur (1) selon une des revendications 1 à 6, **caractérisé en ce que** l'au moins une unité de transmission de données (7 ; 12, 13) est conçue pour alterner entre la communication de courte portée sans fil avec l'appareil mobile (4) sur la première voie de communication (8) et la communication de courte portée sans fil avec la passerelle (5) sur la deuxième voie de communication (9) en fonction du fait que l'appareil mobile (4) ou la passerelle (5) est disponible pour la communication.

8. Distributeur (1) selon la revendication 7, **caractérisé en ce que** l'au moins une unité de transmission de données (7 ; 12, 13) est conçue pour communiquer en même temps aussi bien avec l'appareil mobile (4) sur la première voie de communication (8) qu'avec la passerelle (5) sur la deuxième voie de communication (9) quand l'appareil mobile (4) et la passerelle (5) sont disponibles pour la communication.

9. Distributeur (1) selon une des revendications 1 à 8, **caractérisé en ce que** ce distributeur (1) est conçu pour envoyer des données d'appareil à l'appareil mobile (4) sur la première voie de communication (8) et à la passerelle (5) la deuxième voie de communication (9), lesquelles données d'appareil comprennent de préférence des paramètres de fonctionnement, des données de statut, des données de réglage du distributeur et/ou des messages.

10. Distributeur (1) selon la revendication 9, **caractérisé en ce que** ce distributeur (1) est conçu pour communiquer avec l'appareil mobile (4) sur la première voie de communication (8) selon le standard Bluetooth et est en outre conçu pour envoyer des données de statut du distributeur dans les données d'annonce Bluetooth.

11. Distributeur (1) selon une des revendications 1 à 10, **caractérisé en ce que** ce distributeur (1) est conçu pour recevoir des données de réglage de distributeur de l'appareil mobile (4) sur la première voie de communication (8) et/ou de la passerelle (5) sur la deuxième voie de communication (9) et pour entreprendre des réglages dans le distributeur (1) en fonction des données de réglage de distributeur reçues.

12. Distributeur (1) selon une des revendications 1 à 11, **caractérisé en ce que** ce distributeur (1) comporte un afficheur visible de l'extérieur sur lequel les données de statut du distributeur (1) peuvent être affichées.

13. Système de distribution (3) comprenant au moins un distributeur (1) selon une des revendications 1 à 12, au moins un appareil mobile (4), au moins une passerelle (5) et au moins un serveur (6) communiquant avec l'au moins une passerelle (5).

14. Système de distribution (3) selon la revendication 13, **caractérisé en ce que** l'appareil mobile (4) est configuré comme un téléphone mobile, en particulier un smartphone, comme une tablette, comme un ordinateur portable ou comme une smartwatch.

15. Système de distribution (3) selon la revendication 13 ou 14, **caractérisé en ce que** l'appareil mobile (4) est conçu pour transmettre les données reçues du distributeur (1) au serveur distant (6) par la première voie de communication.

16. Système de distribution (3) selon une des revendications 13 à 15, **caractérisé en ce que** l'appareil mobile (4) offre une possibilité de saisie pour des données de réglage de distributeur et envoie des données de réglage de distributeur au distributeur (1) par la première voie de communication.

17. Système de distribution (3) selon une des revendications 13 à 16, **caractérisé en ce que** le serveur (6) est conçu pour fournir des données de réglage de distributeur et pour envoyer au distributeur les données de réglage de distributeur via la passerelle (5) et/ou via l'appareil mobile (4), l'appareil mobile (4) étant conçu pour transmettre au distributeur (1) les données de réglage de distributeur reçues du serveur (6).
